# EUROPÄISCHE PATENTSCHRIFT

(11) **EP 2 607 003 B1**
(45) Veröffentlichungstag und Bekanntmachung des Hinweises auf die Patenterteilung: **29.07.2015**
(21) Anmeldenummer: 12193326.1
(22) Anmeldetag: 20.11.2012
(51) Int. Cl.: B28D 1/10, B28D 7/00, B28D 1/04, B23D 59/00

(54) **Vorrichtung zur Trennung eines Untergrundes und Verfahren zur Steuerung einer derartigen Trennvorrichtung**
Device for separating an underground and method for controlling such a separator device
Dispositif de séparation d'un sous-sol et procédé de commande d'un tel dispositif de séparation

(30) Priorität: 23.12.2011 DE 102011089878
(43) Veröffentlichungstag der Anmeldung: 26.06.2013
(73) Patentinhaber: HILTI Aktiengesellschaft, 9494 Schaan (LI)
(72) Erfinder: Flock, Marcus, 8862 Schübelbach (CH)
(74) Vertreter: Hilti Aktiengesellschaft Corporate Intellectual Property

(56) Entgegenhaltungen:
- EP-A1- 1 693 173
- WO-A1-2009/108093
- DE-U1- 29 620 173
- US-A1- 2007 163 412

## Beschreibung

### Technisches Gebiet

Die vorliegende Erfindung betrifft eine Vorrichtung zur Trennung eines Untergrundes entlang einer Trennlinie gemäß dem Oberbegriff des Anspruchs 1 sowie ein Verfahren zur Steuerung einer derartigen Trennvorrichtung.

### Stand der Technik

Vorrichtung zur Trennung eines Untergrundes entlang einer Trennlinie dienen beispielsweise zum Durchtrennen von armierten oder nicht-armierten Wänden, Decken und Böden aus Beton oder ähnlichem Untergrund mit Hilfe von rotierenden Sägeblättern. Beispielsweise kann es bei Abbruch-, Sanierungs- oder Umbauarbeiten erforderlich sein, bereits bestehende Betonwände zu durchtrennen, abzutragen oder Bereiche aus den Betonwänden auszuschneiden.

EP 1 693 173 offenbart eine bekannte Vorrichtung zur Trennung eines Untergrundes entlang einer Trennlinie und ein bekanntes Verfahren zur Steuerung einer Trennvorrichtung für einen stückweise automatisierten Bearbeitungsprozess. Die Trennvorrichtung umfasst Sägeeinheit mit einem Sägeblatt, das um eine Drehachse drehbar ist, einem Führungsschlitten zur Bewegung der Sägeeinheit entlang einer Führungsschiene und eine Steuereinrichtung zur Steuerung der Sägeeinheit und des Führungsschlittens. Die Sägeeinheit umfasst einen Sägekopf und einen Sägearm, an dem das Sägeblatt montiert ist und der um eine Schwenkachse parallel zur Drehachse des Sägeblattes schwenkbar ist. Die Steuereinrichtung ist mit einem Verschiebungssensor, der die Position der Sägeeinheit längs der Führungsschiene bestimmt, und einem Schwenkwinkelsensor, der den Schwenkwinkel des Sägearms bestimmt, verbunden. Im Steuerverfahren der Trennvorrichtung erfolgt über ein Eingabemittel der Steuereinrichtung die Eingabe eines ersten und zweiten Endpunktes der Trennlinie, die die beiden Wendepunkte für die Vorschubbewegung des Führungsschlittens darstellen.

Die bekannte Vorrichtung zur Trennung eines Untergrundes entlang einer Trennlinie weist den Nachteil auf, dass der Anwender die Endpunkte der Trennlinie in Koordinaten umrechnen muss, bevor er sie in die Steuereinrichtung eingeben kann. Diese Umrechnung ist fehleranfällig.

Aus DE 296 20 173 U ist eine Vorrichtung zur Trennung eines Untergrundes entlang einer Trennlinie zwischen einem ersten Endpunkt und einem zweiten Endpunkt, gemäß dem Obenbegriff des Anspruchs 1, bekannt. Die Vorrichtung umfasst eine Sägeeinheit mit einem Sägeblatt, einen Führungsschlitten zur Bewegung der Sägeeinheit entlang einer Führungsschiene, eine Steuereinrichtung zur Steuerung der Sägeeinheit und des Führungsschlittens sowie eine erste Anzeigeeinrichtung, die den ersten Endpunkt der Trennlinie markiert. Die bekannte Trennvorrichtung weist den Nachteil auf, dass die erste Anzeigeeinrichtung als Abschaltlineal ausgebildet ist, das die Sägeeinheit abschaltet, sobald der erste Endpunkt der Trennlinie erreicht ist.

### Darstellung der Erfindung

Wünschenswert wäre es, eine Vorrichtung zur Trennung eines Untergrundes entlang einer Trennlinie und ein Verfahren zur Steuerung einer derartigen Trennvorrichtung hinsichtlich der oben erläuterten Nachteile zu verbessern.

Die Aufgabe der vorliegenden Erfindung besteht darin, eine Vorrichtung zur Trennung eines Untergrundes entlang einer Trennlinie dahingehend weiterzuentwickeln, dass der Bediener einen ersten Endpunkt der Trennlinie markiert und die Umrechnung der Längen von der Steuereinrichtung vorgenommen wird. Aufgabe der Erfindung ist es auch, ein entsprechendes Verfahren zur Steuerung der Trennvorrichtung anzugeben.

Diese Aufgabe wird bei der eingangs genannten Vorrichtung zur Trennung eines Untergrundes entlang einer Trennlinie erfindungsgemäß durch die Merkmale des unabhängigen Anspruchs 1 und bei dem eingangs genannten Verfahren zur Steuerung einer derartigen Trennvorrichtung durch die Merkmale des Anspruchs 8 gelöst.

Die erfindungsgemäße Vorrichtung ist dadurch gekennzeichnet, dass eine zweite Anzeigeeinrichtung vorgesehen ist, die den zweiten Endpunkt der Trennlinie markiert, wobei die erste und zweite Anzeigeeinrichtung ein optisches Anzeigeelement, das den Endpunkt optisch markiert, einen Signalerzeuger und eine Detektoreinrichtung aufweisen, wobei der Signalerzeuger ein der Position des Endpunktes oder ein der Position eines Referenzpunktes, der in einem definierten Abstand zum Endpunkt angeordnet ist, entsprechendes Positionssignal aussendet und die Detektoreinrichtung das Positionssignal des Signalerzeugers empfängt. Der Bediener kann mit Hilfe der Anzeigeeinrichtungen die Endpunkte der Trennlinie markieren und muss keine Umrechnung von Längen und Koordinaten vornehmen. Der Bediener kann die Endpunkte, die von einem Lasergerät angezeigt werden, ohne Aufwand auf die zu bearbeitende Fläche übertragen. Der Aufbau der Anzeigeeinrichtungen bestehend aus einem optischen Anzeigeelement, einem Signalerzeuger und einer Detektoreinrichtung ermöglicht ein automatisches Steuerungsverfahren.

Dabei ist die Detektoreinrichtung besonders bevorzugt mit der Steuereinrichtung verbindbar und übermittelt eine dem Positionssignal des Signalerzeugers entsprechende Information an die Steuereinrichtung. In einer bevorzugten Ausführung sind die Detektoreinrichtung der ersten Anzeigeeinrichtung und die Detektoreinrichtung der zweiten Anzeigeeinrichtung als gemeinsame Detektoreinrichtung ausgebildet. Eine gemeinsame Detektoreinrichtung für beide Anzeigeeinrichtungen reduziert den apparativen Aufwand.

Bevorzugt sind die erste Anzeigeeinrichtung und/oder die zweite Anzeigeeinrichtung mittels einer Verschiebeeinrichtung auf der Führungsschiene verschiebbar. Eine verschiebbare Anzeigeeinrichtung hat den Vorteil, dass der Bediener die Anzeigeeinrichtung nicht von der Führungsschiene entnehmen muss, sondern entlang der Führungsschiene verschieben kann. Bevorzugt ist ein mechanischer Endanschlag mit dem optischen Anzeigeelement der ersten und/oder zweiten Anzeigeeinrichtung verbunden.

Als Signalerzeuger und Detektoreinrichtung eignen sich alle gängigen Sensorsysteme, um ein Objekt zu detektieren. Die Detektoreinrichtung ist beispielsweise als induktiver Näherungsschalter ausgebildet, der ein elektrisch leitfähiges Objekt detektiert. Alternativ kann die Detektoreinrichtung als Hall-Sensor oder Nockenschalter ausgebildet sein.

In einer bevorzugten Ausführungsform weist der Signalerzeuger eine Sendeeinheit, die einen Messstrahl aussendet, und ein Messobjekt auf und die Detektoreinrichtung weist eine Empfangseinheit und eine Auswerteeinrichtung auf. Besonders bevorzugt bilden die Sendeeinheit, die Empfangseinheit und die Auswerteeinrichtung ein Laserdistanzmesssystem oder ein Ultraschalldistanzmesssystem. Mit Hilfe von Laser- und Ultraschalldistanzmesssystemen können Distanzen sehr genau gemessen werden.

Die Erfindung betrifft weiterhin ein Verfahren zur Steuerung einer Trennvorrichtung, die einen Untergrund entlang einer Trennlinie zwischen einem ersten Endpunkt und einem zweiten Endpunkt trennt, bei dem ein Positionssignal, das der Position des ersten Endpunktes entspricht, von einem Signalerzeuger erzeugt und von einer Detektoreinrichtung empfangen wird, eine dem Positionssignal entsprechende Information an die Steuereinrichtung übermittelt wird und die Antriebseinrichtung von der Steuereinrichtung entsprechend gesteuert wird.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein.

Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Vorrichtung zur Trennung eines Untergrundes entlang einer Trennlinie zwischen einem ersten und zweiten Endpunkt, die mit einer Anzeigeeinrichtung markiert sind, in einer schematischen Darstellung;
- FIG. 2A, B: eine erste Ausführungsform der Anzeigeeinrichtung mit einem optischen Anzeigeelement und einer als Laserdistanzmesssystem ausgebildeten Sensoreinrichtung (FIG. 2A) und das Zusammenwirken des Laserdistanzmesssystems mit einem Messobjekt als Blockdiagramm (FIG. 2B);
- FIG. 3A,: B ein erfindungsgemäßes Verfahren zur Steuerung einer Trennvorrichtung mit Hilfe der Anzeigeeinrichtung der FIG. 2A (FIG. 3A) und eine Kontrollschleife, mit der die Genauigkeit der Vorschubbewegung bei dem Steuerungsverfahren nach FIG. 3A überprüft wird (FIG. 3B); und
- FIG. 4: eine zweite Ausführungsform der Anzeigeeinrichtung mit einem optischen Anzeigeelement und einer als induktiven Näherungsschalter ausgebildeten Sensoreinrichtung.

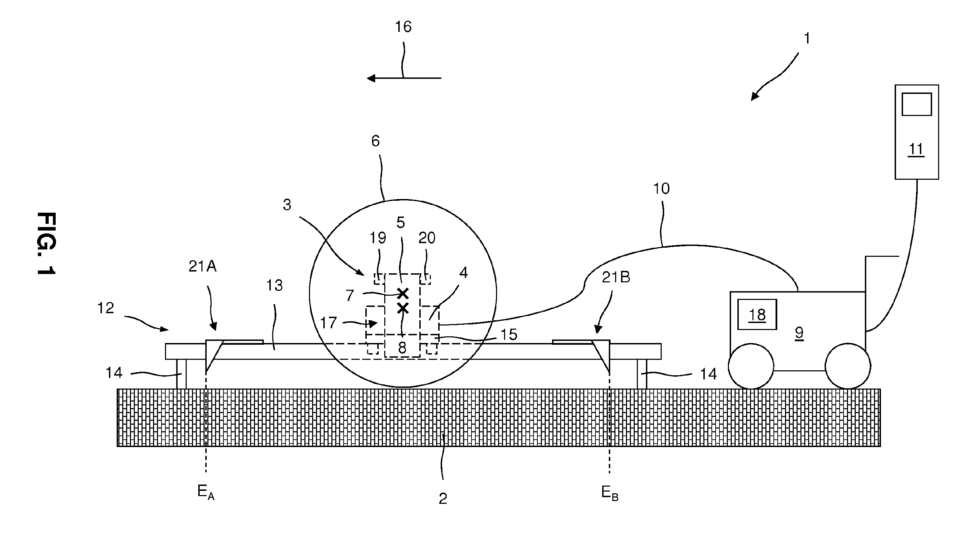

**FIG. 1** zeigt eine erfindungsgemäße Vorrichtung **1** zur Trennung eines Untergrundes **2** entlang einer Trennlinie, die von einem ersten Endpunkt **E_{A}** und einem zweiten Endpunkt **E_{B}** begrenzt ist, in einer schematischen Darstellung.

Die Trennvorrichtung 1 ist als Wandsäge ausgebildet und umfasst eine Sägeeinheit **3** mit einem Sägekopf **4** und einem Sägearm **5**, an dem ein Sägeblatt **6** angeordnet ist. Zum Schutz des Anwenders ist das Sägeblatt 6 von einem Sägeblattschutz (nicht dargestellt) umgeben, der mittels eines Blattschutzhalters am Sägearm 5 angeordnet ist. Das Sägeblatt 6 wird im Sägebetrieb von einer im Sägekopf 4 angeordneten Antriebseinrichtung um eine Drehachse **7** angetrieben. Der Sägearm 5 ist um eine Drehachse **8** schwenkbar ausgebildet. Der Schwenkwinkel des Sägearms 5 bestimmt neben dem Durchmesser des Sägeblattes 6 wie tief das Sägeblatt 6 in den zu bearbeitenden Untergrund 2 eintaucht. Alternativ ist der Sägearm 5 mit Hilfe eines Linearantriebes oder einer sonstigen Antriebseinrichtung verstellbar ausgebildet.

Die elektrische oder hydraulische Versorgung der Sägeeinheit 3 erfolgt über eine Versorgungseinrichtung **9**, in der alle Versorgungseinheiten untergebracht sind. Die Versorgungseinrichtung 9 ist über eine Versorgungsleitung **10**, die sämtliche Kommunikationsleitungen, Elektroleitungen und sonstigen Versorgungsleitungen umfasst, mit der Sägeeinheit 3 verbunden. Die Bedienung der Wandsäge 1 erfolgt über eine Bedienungseinrichtung **11**, die in der in FIG. 1 gezeigten Ausführung mit der Versorgungseinrichtung 9 verbunden ist.

Die in der Versorgungseinrichtung 9 zusammengefassten Versorgungseinheiten können alternativ vollständig oder teilweise in die Sägeeinheit 3 integriert sein. Bei einer vollständigen Integration der Versorgungseinheiten in die Sägeeinheit 3 ist die Bedienungseinrichtung 11 direkt mit der Sägeeinheit 3 verbunden; bei einer teilweisen Integration der Versorgungseinheiten in die Sägeeinheit 3 kann die Bedienungseinrichtung 11 mit der Versorgungseinrichtung 9 und/oder Sägeeinheit 3 verbunden werden.

Die Trennvorrichtung 1 umfasst weiterhin eine Befestigungsvorrichtung **12** bestehend aus einer Führungsschiene **13** und Schienenfüßen **14** sowie einer als Führungsschlitten **15** ausgebildeten Führungseinrichtung. Die Führungsschiene 13 wird mittels der Schienenfüße 14 am zu bearbeitenden Untergrund 2 befestigt. Die Sägeeinheit 3 ist über den Führungsschlitten **15** auf der Führungsschiene 13 in einer Vorschubrichtung **16** sowie in einer Richtung entgegengesetzt zur Vorschubrichtung 16 längsverschiebbar angeordnet.

Die Sägeeinheit 3 umfasst eine erste Antriebseinrichtung zur Rotation des Sägeblattes 6 um die Drehachse 7 und eine zweite Antriebseinrichtung zur Vorschubbewegung des Führungsschlittens 15 entlang der Führungsschiene 13. Die erste und zweite Antriebseinrichtung sind in der Ausführung von FIG. 1 als gemeinsame Antriebseinrichtung **17** ausgebildet; sie können alternativ als getrennte Antriebseinrichtungen in der Sägeeinheit 3 ausgebildet sein. Die Steuerung der Antriebseinrichtung 17 erfolgt über eine Steuereinrichtung **18**, die in die Versorgungseinrichtung 9 integriert ist. Alternativ kann die Steuereinrichtung 18 in der Sägeeinheit 3 oder in der Bedienungseinrichtung 11 untergebracht sein oder die Steuereinrichtung ist in einzelne Steuereinrichtungen unterteilt, die in den verschiedenen Einrichtungen der Wandsäge 1 untergebracht sind.

Die Steuereinrichtung 18 der Sägeeinheit 3 ist mit einer Wegmesseinrichtung **19** zur Erfassung des zurückgelegten Weges und einer Winkelmesseinrichtung **20** zur Erfassung des Schwenkwinkels des Sägearms 5 verbunden. Die Wegmesseinrichtung 19 und die Winkelmesseinrichtung 20 sind in der Ausführung der FIG. 1 an der Sägeeinheit 3 angebracht.

Die Trennlinie ist durch den ersten Endpunkt E_{A} und den zweiten Endpunkt E_{B} begrenzt. Der Bediener markiert den ersten Endpunkt E_{A} mittels einer ersten Anzeigeeinrichtung **21A** und den zweiten Endpunkt E_{B} mittels einer zweiten Anzeigeeinrichtung **21B**. Die zweite Anzeigeeinrichtung 21 B ist analog zur ersten Anzeigeeinrichtung 21A aufgebaut, allerdings spiegelverkehrt auf der Führungsschiene 13 angeordnet. Der Aufbau der ersten und zweiten Anzeigeeinrichtung 21A, 21 B wird am Beispiel der ersten Anzeigeeinrichtung 21A erläutert und gilt analog für die zweite Anzeigeeinrichtung 21 B.

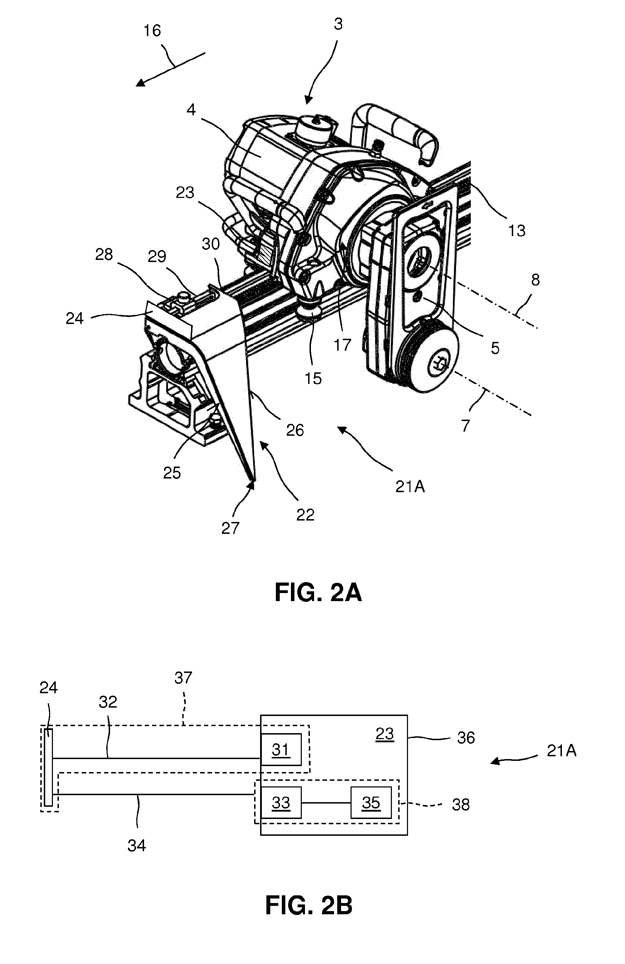

**FIG. 2A** zeigt eine erste Ausführungsform der Anzeigeeinrichtung 21A bestehend aus einem optischen Anzeigeelement **22**, einer Sensoreinrichtung **23** und einem Messobjekt **24**. Die Sensoreinrichtung 23 ist als Laserdistanzmesssystem ausgebildet, das am Sägekopf 4 der Sägeeinheit 3 befestigt ist. Das Messobjekt 24 ist als Reflexions- und/oder Streufläche ausgebildet und an der Position des Endpunktes E_{A} angeordnet.

Das optische Anzeigeelement 22 ist als Blechteil mit einer Rückkante **25** und einer Vorderkante **26**, die eine Pfeilspitze **27** bilden, ausgebildet. Dabei markiert die Rückkante 25 des optischen Anzeigeelementes 22 den Endpunkt E_{A} der Trennlinie. Das optische Anzeigeelement 22 ist mittels einer Befestigungseinrichtung **28** auf der Führungsschiene 13 befestigt. Bei gelöster Befestigungseinrichtung 28 ist die Anzeigeeinrichtung 21A mittels einer Verschiebeeinrichtung **29** entlang der Führungsschiene 13 verschiebbar.

Die Vorschubbewegung der Sägeeinheit 3 entlang der Führungsschiene 13 wird aus Sicherheitsgründen durch einen mechanischen Endanschlag begrenzt. Der Endanschlag verhindert, dass die Sägeeinheit 3 über den erlaubten Arbeitsbereich hinaus entlang der Führungsschiene 13 bewegt wird. In das optische Anzeigeelement 22 ist ein Endanschlag **30** integriert. Stößt der Führungsschlitten 15 bei der Vorschubbewegung gegen den Endanschlag 30, wird die Vorschubbewegung des Führungsschlittens 15 gestoppt. Damit der Endanschlag 30 wirken kann, muss das optische Anzeigeelement 22 mechanisch stabil ausgebildet und sicher über die Befestigungseinrichtung 28 an der Führungsschiene 13 befestigt sein.

**FIG. 2B** zeigt das Zusammenwirken des Laserdistanzmesssystems 23 und des Messobjektes 24 in Form eines Blockdiagramms. Das Laserdistanzmesssystem 23 umfasst eine Sendeeinheit **31**, die einen Laserstrahl **32** aussendet, eine Empfangseinheit **33**, die einen vom Messobjekt 24 reflektierten und/oder gestreuten Laserstrahl **34** empfängt, und eine Auswerteeinrichtung **35**, die mit der Empfangseinheit 33 über eine Kommunikationsverbindung verbunden ist. Die Auswerteeinrichtung 35 berechnet die Differenz der Ist-Position der Sägeeinheit 3 zum Endpunkt E_{A} der Trennlinie, erstellt aus der Differenz einen Steuerbefehl zur Steuerung der Vorschubbewegung der Antriebseinrichtung 17 und übermittelt den Steuerbefehl an die Antriebseinrichtung 17 bzw. an die entsprechende Steuereinrichtung 18. Das Messobjekt 24 markiert den Endpunkt E_{A} der Trennlinie oder einen Referenzpunkt R_{A}, der in einem bekannten Abstand zum Endpunkt E_{A} angeordnet ist.

Das Laserdistanzmesssystem 23 ist in ein Gehäuse **36** integriert, am Sägekopf 4 angebracht und mit dem Führungsschlitten 15 entlang der Führungsschiene 13 verschiebbar ausgebildet. Alternativ kann das Laserdistanzmesssystem 23 in den Sägekopf 4 integriert sein, wobei sichergestellt sein muss, dass der Laserstrahl 32 ungehindert auf das Messobjekt 24 auftreffen kann. In diesem Fall kann die Auswerteeinrichtung 35 in die Steuereinrichtung 18 der Sägeeinheit 3 integriert und über eine Kommunikationsverbindung mit der Empfangseinheit 33 verbunden sein.

Die Sensoreinrichtung 23 und das Messobjekt 24 bilden gemeinsam einen Signalerzeuger **37** und eine Detektoreinrichtung **38**. Der Signalerzeuger 37 umfasst die Sendeeinheit 31 des Laserdistanzmesssystems 23 und das Messobjekt 24 und die Detektoreinrichtung 38 umfasst die Empfangseinheit 33 und die Auswerteeinrichtung 35 des Laserdistanzmesssystems 23.

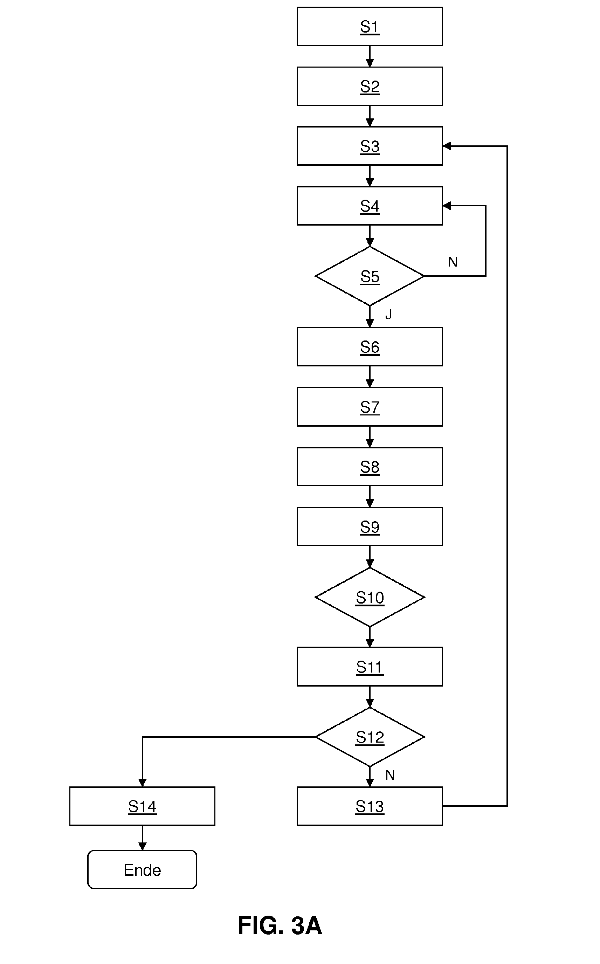

**FIG. 3A** zeigt ein erfindungsgemäßes Verfahren zur Steuerung der Wandsäge 1 mit Hilfe der Anzeigeeinrichtungen 21A, 21 B. Das Steuerungsverfahren ist Teil eines Bearbeitungsverfahrens zur Trennung des Untergrundes 2 entlang der Trennlinie zwischen dem ersten Endpunkt E_{A} und dem zweiten Endpunkt E_{B}. Das Bearbeitungsverfahren ist in ein Vorbereitungsverfahren und ein Steuerungsverfahren unterteilt.

Das Vorbereitungsverfahren umfasst sämtliche vorbereitenden Schritte, die der Anwender durchführt. Der Anwender befestigt die Führungsschiene 13 mittels der Schienenfüße 14 am zu bearbeitenden Untergrund 2 und hängt die Sägeeinheit 3 in einer beliebigen Startposition in die Führungsschiene 13 ein, wobei die Startposition zwischen dem ersten Endpunkt E_{A} und dem zweiten Endpunkt E_{B} der Trennlinie angeordnet ist. Der Anwender markiert den ersten Endpunkt E_{A} mit Hilfe der ersten Anzeigeeinrichtung 21A und markiert den zweiten Endpunkt E_{B} mit Hilfe der zweiten Anzeigeeinrichtung 21 B. Die erste und zweite Anzeigeeinrichtung 21A, 21 B werden mit Hilfe der Befestigungseinrichtung 28 an der Führungsschiene 13 befestigt.

Der Anwender gibt verschiedene Parameter, wie beispielsweise den Durchmesser des Sägeblattes 6, die Endschnitttiefe der Trennlinie und die maximale Vorschubgeschwindigkeit, über die Bedienungseinrichtung 11 ein. Die Parameter werden an die Steuereinrichtung 18 übertragen. Die weiteren Parameter, die für ein automatisches Steuerungsverfahren benötigt werden, sind in der Steuereinrichtung 18 hinterlegt oder werden von der Steuereinrichtung 18 aus den bekannten Parametern berechnet. Im Vorbereitungsverfahren werden alle notwendigen Schritte für das automatische Steuerungsverfahren durchgeführt und fehlende Parameter bestimmt, so dass das anschließende Steuerungsverfahren in automatischer Weise ohne Eingriff des Anwenders erfolgt.

Das Sägeblatt 6 arbeitet sich während des Steuerungsverfahrens zwischen dem ersten Endpunkt E_{A} und dem zweiten Endpunkt E_{B} der Trennlinie bis zu einer Endschnitttiefe in den zu bearbeitenden Untergrund 2 hinein. Die Trennung des Untergrundes 2 bis zur Endschnitttiefe erfolgt in einem oder mehreren Schnitten. Der erste Schnitt erfolgt zweiteilig, wenn die Startposition der Sägeeinheit 3 zwischen dem ersten Endpunkt E_{A} und zweiten Endpunkt E_{B} der Trennlinie liegt, wobei im ersten Teil die Trennlinie zwischen dem Startpunkt und dem ersten Endpunkt E_{A} in der Vorschubrichtung 16 und im zweiten Teil die Trennlinie zwischen dem Startpunkt und dem zweiten Endpunkt E_{B} entgegen der Vorschubrichtung 16 erzeugt werden. Die weiteren Schnitte erfolgen zwischen dem ersten Endpunkt E_{A} und dem zweiten Endpunkt E_{B} abwechselnd in Vorschubrichtung 16 und entgegen der Vorschubrichtung 16. Die Steuereinrichtung 18 legt die Schnitttiefen der einzelnen Schnitte fest und bestimmt die den Schnitttiefen entsprechenden Schwenkwinkel des Sägearms 5.

Der Anwender startet das Steuerungsverfahren in einem Schritt **S1** über die Bedienungseinrichtung 11. Der Sägearm 5 wird in einem Schritt **S2** von der Antriebseinrichtung 17 in die dem Schwenkwinkel des ersten Schnittes entsprechende Position bewegt, wobei der Sägearm 5 bevorzugt in einer ziehenden Stellung angeordnet ist. In einem Schritt **S3** werden die Sendeeinheit 31 und die Empfangseinheit 33 des Laserdistanzmesssystems 23 von der Steuereinrichtung 18 aktiviert und die Sägeeinheit 3 wird in einem Schritt **S4** mit Hilfe der Antriebseinrichtung 17 entlang der Führungsschiene 13 bewegt. Für den Fall, dass das Laserdistanzmesssystem 23 immer aktiviert ist, kann der Schritt S3 entfallen bzw. durch eine Kontrollschleife ersetzt werden, in der die Steuereinrichtung 18 prüft, ob das Laserdistanzmesssystem 23 aktiviert ist.

In einem Schritt **S5** wird geprüft, ob die Empfangseinheit 33 ein Positionssignal empfangen hat. Hat die Empfangseinheit 33 kein Positionssignal empfangen (N in S5), wird das Verfahren mit Schritt S4 fortgesetzt. Wenn die Empfangseinheit 33 ein Positionssignal empfangen hat (J in S5), übermittelt die Empfangseinheit 33 in einem Schritt **S6** eine dem Positionssignal entsprechende Information an die Auswerteeinrichtung 35. Die Auswerteeinrichtung 35 berechnet in einem Schritt **S7** aus dem Positionssignal den Abstand der Ist-Position zum ersten Endpunkt E_{A} der Trennlinie und erteilt in einem Schritt **S8** einen Steuerbefehl an die Antriebseinrichtung 17, die Sägeeinheit 3 um den berechneten Abstand entlang der Führungsschiene 13 zu verfahren. Die Steuereinrichtung 18 startet in einem Schritt **S9** mit Hilfe der Wegmesseinrichtung 19 die Messung des Weges, den der Führungsschlitten 15 entlang der Führungsschiene 13 verfahren wird.

In einem Schritt **S10** wird der in Schritt S7 berechnete Abstand mit dem von der Wegmesseinrichtung 19 gemessenen Weg verglichen und es wird geprüft, ob der gemessene Weg dem aus dem Positionssignal berechneten Abstand entspricht. Unterschreitet der von der Wegmesseinrichtung 19 gemessene Weg den berechneten Abstand (N in S10), wird das Verfahren mit Schritt S10 fortgesetzt. Entspricht der gemessene Weg dem berechneten Abstand (J in S10), wird die Vorschubbewegung der Sägeeinheit 3 in einem Schritt **S11** beendet.

Nach dem Ende des Schnittes prüft die Steuereinrichtung 18 in einem Schritt **S12**, ob die Endschnitttiefe der Trennlinie erreicht ist. Ist die Endschnitttiefe der Trennlinie nicht erreicht (N in S12), wird die Sägeeinheit 3 in einem Schritt **S13** von der Antriebseinrichtung 17 um eine Längendifferenz in eine Position verfahren, die dem zugehörigen Schwenkwinkel des Sägearms 5 entspricht, und der Sägearm 5 wird in die dem Schwenkwinkel entsprechende Position geschwenkt. Die Bewegungsrichtung wird gewechselt und der Sägearm 5 bevorzugt wieder in der ziehenden Stellung angeordnet. Der Schwenkwinkel und die Längendifferenz sind so aufeinander abgestimmt, dass das Ende des Sägeblattes 6 mit dem Endpunkt der Trennlinie übereinstimmt. Nach Schritt S13 wird das Verfahren mit Schritt S3 fortgesetzt. Wenn die Endschnitttiefe der Trennlinie erreicht ist (J in S12), wird der Sägearm 5 in einem Schritt **S14** aus dem Untergrund 2 herausgeschwenkt und in die Ausgangsposition oder eine vordefinierte Position verfahren. Nach Schritt S14 ist das erfindungsgemäße Verfahren beendet.

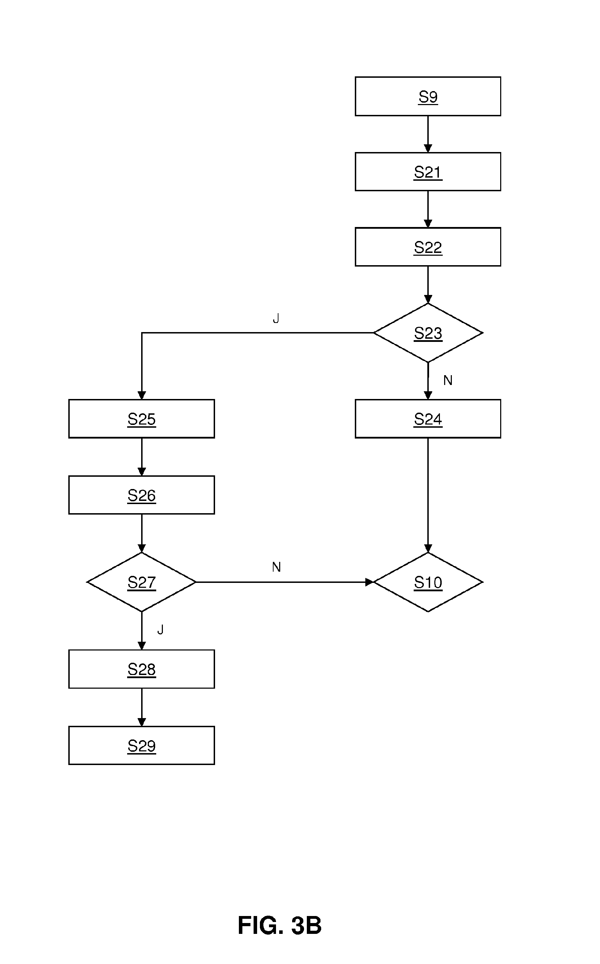

In einer Weiterentwicklung bietet das Laserdistanzmesssystem 23 die Möglichkeit, die Genauigkeit der Vorschubbewegung zu überprüfen und ggf. zu erhöhen. **FIG. 3B** zeigt eine Kontrollschleife, die im Verfahren von FIG. 3A zwischen den Schritten S9 und S10 durchgeführt werden kann.

In einem Schritt **S21** aktiviert die Steuereinrichtung 18 die Sendeeinheit 31 und die Empfangseinheit 33 des Laserdistanzmesssystems 23. Die Sendeeinheit 31 sendet in einem Schritt **S22** auf Befehl der Steuereinrichtung 18 einen weiteren Laserstrahl 32 auf das Messobjekt 24 aus. In einem Schritt **S23** wird geprüft, ob die Empfangseinheit 33 ein weiteres Positionssignal empfangen hat. Hat die Empfangseinheit 33 kein weiteres Positionssignal empfangen (N in S23), wird die Sägeeinheit 3 in einem Schritt **S24** um den aus dem Positionssignal bestimmten Abstand verfahren und das Verfahren wird mit Schritt S10 fortgesetzt.

Wenn die Empfangseinheit 33 ein weiteres Positionssignal empfangen hat (J in S23), übermittelt die Empfangseinheit 33 in einem Schritt **S25** eine dem weiteren Positionssignal entsprechende Information an die Auswerteeinrichtung 35, die den Abstand der aktuellen Ist-Position zum ersten Endpunkt E_{A} in einem Schritt **S26** ermittelt. In einem Schritt **S27** wird der aus dem weiteren Positionssignal ermittelte Abstand mit dem Abstand, der sich als Differenz aus dem ersten Abstand und dem von der Wegmesseinrichtung 19 gemessenen Weg ergibt, verglichen und es wird geprüft, ob eine voreingestellte Abweichung überschritten wird. Wird die voreingestellte Abweichung nicht überschritten (N in S27), wird das Verfahren mit Schritt S10 fortgesetzt. Wird die voreingestellte Abweichung überschritten (J in S27), erteilt die Steuereinrichtung 18 in einem Schritt **S28** einen Steuerbefehl an die Antriebseinrichtung 17, die Sägeeinheit 3 um den aus dem weiteren Positionssignal ermittelten Abstand zu verfahren. Die Antriebseinrichtung 17 verfährt die Sägeeinheit 3 in einem Schritt **S29** um den neuen Abstand.

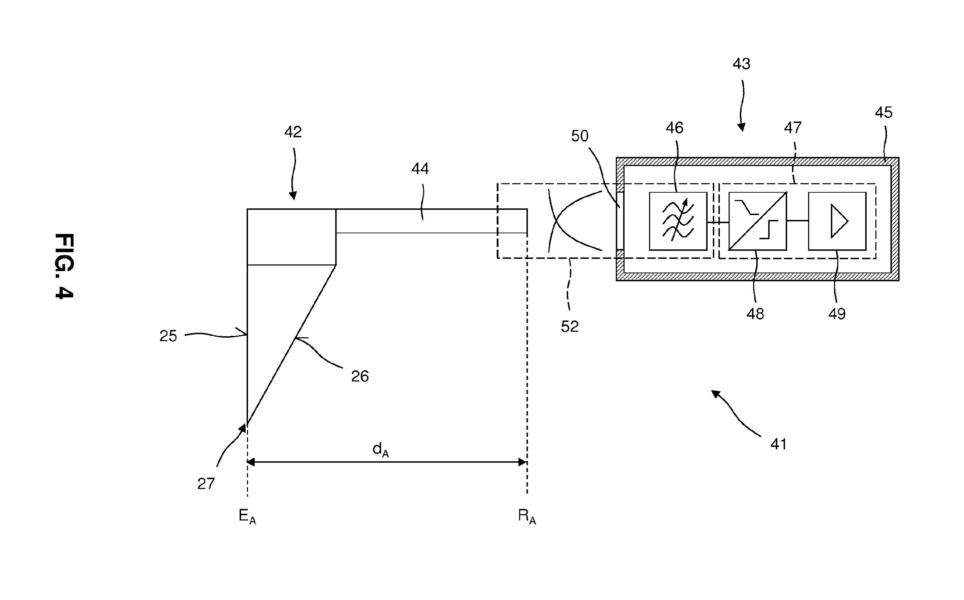

**FIG. 4** zeigt eine weitere Ausführungsform einer Anzeigeeinrichtung **41** bestehend aus einem optischen Anzeigeelement **42**, einer Sensoreinrichtung **43** und einem Messobjekt **44**. Das optische Anzeigeelement 42 ist analog zum optischen Anzeigeelement 22 der FIG. 2A als Blechteil mit der Rückkante 25, der Vorderkante 26 und der Pfeilspitze 27 ausgebildet und zeigt dem Bediener den Endpunkt E_{A} der Trennlinie optisch an.

Die Sensoreinrichtung 43 ist als induktiver Näherungsschalter ausgebildet. Der induktive Näherungsschalter 43 besteht aus einem Gehäuse **45**, einem Oszillator **46** und einer Elektronikeinheit **47**, die eine Kippstufe **48** und einen Verstärker **49** umfasst. Der Oszillator 46 erzeugt ein hochfrequentes Wechselfeld, das an einer aktiven Fläche **50** aus dem Gehäuse 45 des induktiven Näherungsschalters 43 austritt.

Das Messobjekt 44 ist stabförmig ausgebildet und besteht aus einem elektrisch leitenden Material, wie beispielsweise Stahl, Kupfer oder Aluminium. An einem ersten Ende ist das Messobjekt 44 mit dem optischen Anzeigeelement 42 verbunden. Ein zweites Ende des Messobjektes 44 markiert einen Referenzpunkt **R_{A},** der einen bekannten Abstand **d**_{A} zum Endpunkt E_{A} der Trennlinie aufweist. Der Abstand d_{A} des Referenzpunktes R_{A} zum Endpunkt E_{A} ist in der Steuereinrichtung 18 gespeichert.

Tritt das elektrisch leitende Messobjekt 44 in das Wechselfeld des Oszillators 46 ein, entsteht im Messobjekt 44 eine Induktionswirbelspannung und es fließt ein Wirbelstrom. Durch den Wirbelstrom wird dem Oszillator 46 Energie entzogen, was zu einer Verkleinerung der Schwingungsamplitude des Oszillators 46 führt. In der Elektronikeinheit 47 wird die Verkleinerung der Schwingungsamplitude ausgewertet und in ein eindeutiges Schaltsignal umgewandelt.

Die Sensoreinrichtung 43 und das Messobjekt 44 bilden gemeinsam einen Signalerzeuger **51** und eine Detektoreinrichtung **52**, die mit dem Signalerzeuger 51 zusammenwirkt. Der Oszillator 46 und das elektrisch leitende Messobjekt 44 bilden den Signalerzeuger 51, der ein der Position des Referenzpunktes R_{A} entsprechendes Positionssignal erzeugt. Die Detektoreinrichtung 52 besteht aus der Elektronikeinheit 47. Die Detektoreinrichtung 52 empfängt das Positionssignal und führt eine Auswertung durch.

## Patentansprüche

1. Vorrichtung (1) zur Trennung eines Untergrundes (2) entlang einer Trennlinie zwischen einem ersten Endpunkt (E_{A}) und einem zweiten Endpunkt (E_{B}), umfassend eine Sägeeinheit (3) mit einem Sägeblatt (6), das um eine Drehachse (7) drehbar ist, einen Führungsschlitten (15) zur Bewegung der Sägeeinheit (3) entlang einer Führungsschiene (13),
eine Steuereinrichtung (18) zur Steuerung der Sägeeinheit (3) und des Führungsschlittens (15) und
eine erste Anzeigeeinrichtung (21A; 41), die den ersten Endpunkt (E_{A}) der Trennlinie markiert,
**dadurch gekennzeichnet, dass** eine zweite Anzeigeeinrichtung (21 B; 41) vorgesehen ist, die den zweiten Endpunkt (E_{B}) der Trennlinie markiert, wobei die erste und zweite Anzeigeeinrichtung (21A, 21 B; 41) ein optisches Anzeigeelement (22; 42), das den Endpunkt (E_{A}, E_{B}) optisch markiert, einen Signalerzeuger (23; 43) und eine Detektoreinrichtung (24; 44) aufweisen, wobei der Signalerzeuger (23; 43) ein der Position des Endpunktes (E_{A}, E_{B}) oder ein der Position eines Referenzpunktes (R_{A}, R_{B}), der in einem definierten Abstand (d_{A}, d_{B}) zum Endpunkt (E_{A}, E_{B}) angeordnet ist, entsprechendes Positionssignal aussendet und die Detektoreinrichtung (24; 44) das Positionssignal des Signalerzeugers (23; 43) empfängt.

2. Vorrichtung nach Anspruch 1, **dadurch gekennzeichnet, dass** die Detektoreinrichtung (38; 52) mit der Steuereinrichtung (18) verbindbar ist und eine dem Positionssignal des Signalerzeugers (23; 43) entsprechende Information an die Steuereinrichtung (18) übermittelt.

3. Vorrichtung nach Anspruch 2, **dadurch gekennzeichnet, dass** die Detektoreinrichtung der ersten Anzeigeeinrichtung (21A) und die Detektoreinrichtung der zweiten Anzeigeeinrichtung (21 B) als gemeinsame Detektoreinrichtung ausgebildet sind.

4. Vorrichtung nach einem der Ansprüche 1 bis 3, **dadurch gekennzeichnet, dass** die erste Anzeigeeinrichtung (21A) und/oder zweite Anzeigeeinrichtung (21 B) mittels einer Verschiebeeinrichtung (29) auf der Führungsschiene (13) verschiebbar sind.

5. Vorrichtung nach einem der Ansprüche 1 bis 4, **dadurch gekennzeichnet, dass** ein mechanischer Endanschlag (30) mit dem optischen Anzeigeelement (22) der ersten und/oder zweiten Anzeigeeinrichtung (21A, 21 B) verbunden ist.

6. Vorrichtung nach einem der Ansprüche 1 bis 5, **dadurch gekennzeichnet, dass** der Signalerzeuger (23) eine Sendeeinheit (33), die einen Messstrahl (34) aussendet, und ein Messobjekt (32) aufweist und die Detektoreinrichtung (24) eine Empfangseinheit (35) und eine Auswerteeinrichtung (37) aufweist.

7. Vorrichtung nach Anspruch 6, **dadurch gekennzeichnet, dass** die Sendeeinheit (33), die Empfangseinheit (35) und die Auswerteeinrichtung (37) ein Laserdistanzmesssystem (31) oder ein Ultraschalldistanzmesssystem bilden.

8. Verfahren zur Steuerung einer Trennvorrichtung (1) nach einem der Ansprüche 1 bis 7, die einen Untergrund (2) entlang einer Trennlinie zwischen einem ersten Endpunkt (E_{A}) und einem zweiten Endpunkt (E_{B}) trennt, bei dem ein Positionssignal, das der Position des ersten Endpunktes (E_{A}) entspricht, von einem Signalerzeuger (23; 43) erzeugt und von einer Detektoreinrichtung (24; 44) empfangen wird, eine dem Positionssignal entsprechende Information an die Steuereinrichtung (18) übermittelt wird und die Antriebseinrichtung (17) von der Steuereinrichtung (18) entsprechend gesteuert wird.

## Claims

1. Apparatus (1) for cutting a substrate (2) along a line of cut between a first end point (E_{A}) and a second end point (E_{B}), comprising
a sawing unit (3) having a saw blade (6) which is rotatable on an axis of rotation (7),
a guiding slider (15) to move the sawing unit (3) along a guide rail (13),
a control means (18) to control the sawing unit (3) and the guiding slider (15), and
a first indicating means (21A, 41) which marks the first end point (E_{A}) of the line of cut,
**characterised in that** a second indicating means (21B, 41) is provided which marks the second end point (E_{B}) of the line of cut, the first and second indicating means (21A, 21B, 41) having an optical indicating member (22, 42) which marks the end point (E_{A}, E_{B}) optically, a signal generator (23, 43) and a detector means (24, 44), with the signal generator (23, 43) emitting a position signal corresponding to the position of the end point (E_{A}, E_{B}) or a position signal corresponding to the position of a reference point (R_{A}, R_{B}) which is arranged at a defined distance (d_{A}, d_{B}) from the end point (E_{A}, E_{B}) and with the detector means (24, 44) receiving the position signal from the signal generator (23, 43).

2. Apparatus according to claim 1, **characterised in that** the detector means (38, 52) can be connected to the control means (18) and transmits to the control means (18) information corresponding to the position signal from the signal generator (23, 43).

3. Apparatus according to claim 2, **characterised in that** the detector means of the first indicating means (21A) and the detector means of the second indicating means (21B) take the form of a shared detector means.

4. Apparatus according to one of claims 1 to 3, **characterised in that** the first indicating means (21A) and/or the second indicating means (21B) are displaceable on the guide rail (13) by means of a displacement means (29).

5. Apparatus according to one of claims 1 to 4, **characterised in that** a mechanical end-stop (30) is connected to the optical indicating member (22) of the first and/or second indicating means (21A, 21B).

6. Apparatus according to one of claims 1 to 5, **characterised in that** the signal generator (23) has an object for measurement (32) and a transmitting unit (33) which emits a measuring beam (34), and the detector means (24) has a receiving unit (35) and an analysing means (37).

7. Apparatus according to claim 6, **characterised in that** the transmitting unit (33), the receiving unit (35) and the analysing means (37) form a laser distance-measuring system (31) or an ultrasonic distance-measuring system.

8. Method of controlling a cutting apparatus (1) according to one of claims 1 to 7 which cuts a substrate (2) along a line of cut between a first end point (E_{A}) and a second end point (E_{B}), wherein a position signal which corresponds to the position of the first end point (E_{A}) is generated by a signal generator (23, 43) and is received by a detector means (24, 44), information corresponding to the position signal is transmitted to the control means (18), and the drive means (17) is controlled accordingly by the control means (18).

## Revendications

1. Dispositif (1) pour séparer un sol (2) le long d'une ligne de séparation entre un premier point d'extrémité (E_{A}) et un second point d'extrémité (E_{B}), incluant une unité de scie (3) comportant une lame de scie (6) qui peut tourner autour d'un axe de rotation (7),
un chariot de guidage (15) pour déplacer l'unité de scie (3) le long d'un rail de guidage (13),
un dispositif de commande (18) pour commander l'unité de scie (3) et le chariot de guidage (15) et
un premier dispositif d'affichage (21A ; 41) qui marque le premier point d'extrémité (E_{A}) de la ligne de coupe,
**caractérisé en ce qu'**est prévu un second dispositif d'affichage (21B ; 41) qui marque le second point d'extrémité (E_{B}) de la ligne de coupe, dans lequel les premier et second dispositifs d'affichage (21A, 21B ; 41) comportent un élément d'affichage optique (22 ; 42) qui marque optiquement le point d'extrémité (E_{A}, E_{B}) , un générateur de signaux (23 ; 43) et un dispositif de détection (24 ; 44), dans lequel le générateur de signaux (23 ; 43) émet un signal de position correspondant à la position du point d'extrémité (E_{A}, E_{B}) ou à la position d'un point de référence (R_{A}, R_{B}) qui est agencé à une distance définie (d_{A}, d_{B}) du point d'extrémité (E_{A}, E_{B}), et le dispositif de détection (24 ; 44) reçoit le signal de position du générateur de signaux (23 ; 43).

2. Dispositif selon la revendication 1, **caractérisé en ce que** le dispositif de détection (38 ; 52) peut être relié au dispositif de commande (18) et transmet au dispositif de commande (18) une information correspondant au signal de position du générateur de signaux (23 ; 43).

3. Dispositif selon la revendication 2, **caractérisé en ce que** le dispositif de détection du premier dispositif d'affichage (21A) et le dispositif de détection du second dispositif d'affichage (21B) sont configurés comme un dispositif de détection commun.

4. Dispositif selon l'une des revendications 1 à 3, **caractérisé en ce que** le premier dispositif d'affichage (21A) et/ou le second dispositif d'affichage (21B) peuvent être coulissés sur le rail de guidage (13) au moyen d'un dispositif de coulissement (29).

5. Dispositif selon l'une des revendications 1 à 4, **caractérisé en ce qu'**une butée d'extrémité (30), mécanique, est reliée à l'élément d'affichage optique (22) du premier et/ou second dispositif d'affichage (21A, 21B) .

6. Dispositif selon l'une des revendications 1 à 5, **caractérisé en ce que** le générateur de signaux (23) comporte une unité d'émission (33) qui émet un faisceau de mesure (34), et un objet de mesure (32), et le dispositif de détection (24) comporte une unité de réception (35) et un dispositif d'évaluation (37).

7. Dispositif selon la revendication 6, **caractérisé en ce que** l'unité d'émission (33), l'unité de réception (35) et l'unité d'évaluation (37) forment un système de mesure de distance par laser (31) ou un système de mesure de distance par ultrasons.

8. Procédé pour commander un dispositif de séparation (1) selon l'une des revendications 1 à 7, qui sépare un sol (2) le long d'une ligne de séparation entre un premier point d'extrémité (E_{A}) et un second point d'extrémité (E_{B}) , dans lequel un signal de position correspondant à la position du premier point d'extrémité (E_{A}), est généré par un générateur de signaux (23 ; 43) et est reçu par un dispositif de détection (24 ; 44), une information correspondant au signal de position est transmise au dispositif de commande (18) et le dispositif d'entraînement (17) est commandé par le dispositif de commande (18) de manière correspondante.
